# EUROPEAN PATENT APPLICATION

(11) **EP 2 375 764 A2**
(43) Date of publication of application: **12.10.2011**
(21) Application number: 11160532.5
(22) Date of filing: 30.03.2011
(51) Int. Cl.: H04N 13/00

(54) **Methods of controlling 3D glasses, display apparatus and control terminal, and 3D glasses, display apparatus, control terminal and 3D display system thereof**

(30) Priority: 07.04.2010 KR 20100031743
(71) Applicant: SAMSUNG ELECTRONICS CO., LTD., Suwon-si Gyeonggi-do 442-742 (KR)
(72) Inventor: Park, Jung-jin, Gyeonggi-do (KR); Ha, Tae-hyeun, Gyeonggi-do (KR); Kwak, Jong-kil, Gyeonggi-do (KR)
(74) Representative: Brandon, Paul Laurence

(57) **Abstract**

Methods of controlling three-dimensional (3D) glasses, a display apparatus, and a control terminal for controlling brightness of a 3D image, and the 3D glasses, the display apparatus, the control terminal, and a 3D display system related to the same are provided. The method of controlling the 3D glasses includes: obtaining a control signal related to controlling brightness of an image; and controlling a shutter of the 3D glasses according to the obtained control signal.

## Description

### CROSS-REFERENCE TO RELATED APPLICATION

This application claims priority from Korean Patent Application No. 10-2010-0031743, filed on April 07, 2010 in the Korean Intellectual Property Office, the disclosure of which is incorporated herein by reference in its entirety.

### BACKGROUND

### 1. Field

Apparatuses and methods consistent with exemplary embodiments relate to a three-dimensional (3D) display system including 3D glasses, and more particularly, to a technology of controlling brightness of an image which passes the 3D glasses by controlling a shutter of the 3D glasses according to a specific control signal.

### 2. Description of the Related Art

3D image technologies are applied to various fields such as information communication, broadcasting, healthcare, education and training, military, gaming, animation, virtual reality, computer-aided drafting (CAD), industrial technologies, etc., and are regarded as core technologies of next-generation 3D multimedia information communications commonly used in the various application fields.

In general, a 3D effect perceived by human beings is created by composite action of thickness variation of a crystalline lens based on a position of an object to be observed, an angle difference between both eyes and a target object, differences of positions and shapes of the target object between a left eye and a right eye, a binocular disparity caused by a motion of the target object, and effects due to various kinds of psychological and memory effects.

Among the factors, the binocular disparity caused by two eyes of human beings spaced apart from each other by about 6 to 7 cm in the lateral direction is regarded as an important factor in the 3D effect. That is, the eyes see the target object with an angle difference by the binocular disparity such that images received by the respective eyes are different from each other. The two images are transferred to the brain through the retina and the brain combines the two pieces of information so as to feel the original 3D effect.

3D image display apparatuses are classified as a glasses type which uses special glasses and a non-glasses type which doest not use the special glasses. The glasses type 3D image display apparatuses include a color filter type which divides and selects the image using a complementary color filter, a polarization filter type which divides the image into a left eye image and a right eye image using a light shielding effect by a combination of orthogonal polarizers, and a glasses shutter type which alternatively closes a left eye shutter and a right eye shutter according to a synchronization signal corresponding to a display of a left eye image and a right eye image on a screen to allow viewers to feel the 3D effect.

### SUMMARY

One or more exemplary embodiment provide methods of controlling three-dimensional (3D) glasses, a display apparatus and a control terminal capable of conveniently or automatically controlling brightness of a 3D image, and the 3D glasses, the display apparatus, the control terminal, and a 3D display system related to the same.

One or more exemplary embodiment provide methods of controlling 3D glasses, a display apparatus and a control terminal capable of controlling brightness of a 3D image which is being viewed by a user by effectively changing transmittance of the 3D glasses, and the 3D glasses, the display apparatus, the control terminal, and a 3D display system related to the same.

According to an aspect of an exemplary embodiment, there is provided a method of controlling 3D glasses, the method including: obtaining a control signal related to controlling brightness of an image; and controlling a shutter of the 3D glasses according to the obtained control signal.

The controlling the shutter of the 3D glasses may include controlling transmittance of the shutter of the 3D glasses according to the obtained control signal.

The method may further include sensing at least one of brightness of the image and brightness of an environment using an optical sensor and the controlling the shutter of the 3D glasses may include controlling the shutter of the 3D glasses according to at least one of the sensed brightness of the image and the sensed brightness of the environment.

The controlling the shutter of the 3D glasses may include controlling a driving voltage of the shutter of the 3D glasses according to the obtained control signal.

The controlling the driving voltage may include controlling the driving voltage of the shutter of the 3D glasses by controlling an amplitude of the driving voltage.

The controlling a driving voltage may include controlling the driving voltage of the shutter of the 3D glasses by controlling a duty ratio of the driving voltage.

The obtaining the control signal may include receiving the control signal through at least one of a control wheel attached to the 3D glasses, an UP/DOWN button, and a remote controller.

The method may further include providing a user interface (UI) screen to allow a user to control the brightness and the control signal may correspond to an input of the user for the UI screen.

According to an aspect of another exemplary embodiment, there is provided a method of processing an image of a display device, the method including: processing an image which is to be viewed through three-dimensional (3D) glasses; transmitting a control signal to the 3D glasses to allow the 3D glasses to control brightness of the image by controlling transmittance of the 3D glasses.

The generating the control signal may include generating the control signal according to an input of a user through a user interface (UI) screen.

According to an aspect of another exemplary embodiment, there is provided a method of controlling a control terminal, the method including: generating a control signal related to controlling brightness of an image which penetrates three-dimensional glasses (3D); and providing the control signal to the 3D glasses to allow the 3D glasses to control the brightness of the image by controlling transmittance of the 3D glasses.

The providing the control signal may include providing the control signal to the 3D glasses from a display which displays the image.

The generating the control signal may include generating the control signal using an input device attached to the 3D glasses.

According to an aspect of another exemplary embodiment, there is provided three-dimensional (3D) glasses, the 3D glasses including: an interface which obtains a control signal related to controlling brightness of an image; and a shutter which is driven according to the obtained control signal.

The glasses may further include a transmittance controller which controls transmittance of the shutter according to the obtained control signal.

The glasses may further include an optical sensor which senses at least one of the brightness of the image and brightness of an environment, and the transmittance controller may control the transmittance of the shutter by considering at least one of the sensed brightness of the image and the sensed brightness of the environment.

The glasses may further include a driving voltage generator which controls a driving voltage of the shutter according to the obtained control signal.

The driving voltage generator may control the driving voltage of the shutter by controlling an amplitude of the driving voltage.

The driving voltage generator may control the driving voltage of the shutter by controlling a duty ratio of the driving voltage.

The interface may receive the control signal through at least one of a control wheel attached to the 3D glasses, an UP/DOWN button, and a remote controller.

The control signal may correspond to an input of a user for a user interface (UI) screen provided to the user.

According to an aspect of another exemplary embodiment, there is provided an image processing apparatus, the apparatus including: an output unit which outputs an image which is to be viewed by three-dimensional (3D) glasses; a controller which provides a user interface (UI) screen used for generating a control signal which controls brightness of an image viewed by a user by controlling transmittance of the 3D glasses; and a signal transmission/reception unit which transmits the control signal to the 3D glasses according to an input of the user for the UI screen.

The control signal may be a control signal which controls at least one of an amplitude and a duty ratio of a shutter driving voltage of the 3D glasses.

According to an aspect of another exemplary embodiment, there is provided a control terminal, the terminal including a controller which obtains a control signal related to controlling brightness of an image which penetrates three-dimensional (3D) glasses; and a providing unit which provides the control signal to the 3D glasses to allow the 3D glasses to control the brightness of the image by controlling transmittance of the 3D glasses.

The terminal may provide the control signal to the 3D glasses through a display which displays the image.

The terminal may generate the control signal through at least one of a control wheel attached to the 3D glasses, an UP/DOWN button, and an optical sensor.

According to an aspect of another exemplary embodiment, there is provided a three-dimensional (3D) display system, the system including: a display which displays an image including a left eye image and a right eye image; a control terminal which obtains a control signal related to controlling brightness of the image which penetrates the 3D glasses; and the 3D glasses which control transmittance thereof according to the control signal.

The display may provide a user interface (UI) screen for controlling the brightness of the image to allow the 3D glasses to control transmittance of the image.

The 3D glasses may control the brightness of the image by controlling an amplitude of a shutter driving voltage.

The 3D glasses may control the brightness of the image by controlling a duty ratio of the shutter driving voltage.

As described above, according to aspects of exemplary embodiments, methods of controlling 3D glasses, a display apparatus and a control terminal, and the 3D glasses, the display apparatus, the control terminal, and the 3D display system related to the same, can conveniently or automatically control brightness of a 3D image device.

In addition, according to exemplary embodiments, the brightness of the 3D image which is viewed to a user can be effectively controlled by changing transmittance of the 3D glasses.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and/or other aspects will be more apparent by describing in detail exemplary embodiments, with reference to the accompanying drawings, in which:

FIG. 1 is a schematic block diagram illustrating a three-dimensional (3D) image system according to an exemplary embodiment;

FIG. 2 is a schematic block diagram illustrating a control signal process of 3D glasses according to an exemplary embodiment;

FIG. 3A is a graph illustrating increase and decrease in an amplitude of a driving voltage of 3D glasses according to an exemplary embodiment;

FIG. 3B is a graph illustrating increase and decrease in a duty ratio of a driving voltage of 3D glasses according to an exemplary embodiment

FIGS. 4A to 4C are views illustrating 3D glasses including control units attached thereto according to exemplary embodiments; and

FIG. 5 is a flowchart illustrating a method of controlling 3D glasses according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed constructions and elements, are provided to assist in a comprehensive understanding of the exemplary embodiments. Thus, it is apparent that exemplary embodiments can be carried out without those specifically defined matters. Also, functions or elements known in the related art are not described in detail since they would obscure the exemplary embodiments with unnecessary detail. Moreover, expressions such as "at least one of," when preceding a list of elements, modify the entire list of elements and do not modify the individual elements of the list.

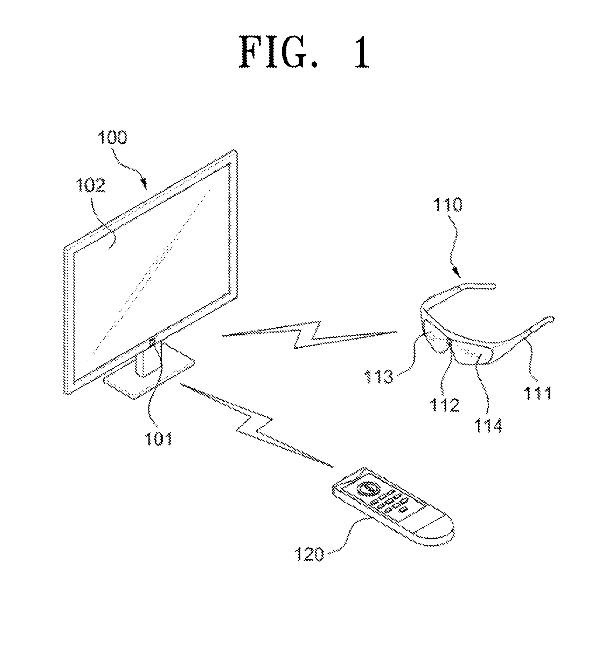

FIG. 1 is a schematic block diagram illustrating a three-dimensional (3D) display system according to an exemplary embodiment.

Referring to FIG. 1, the 3D display system includes a display 100, 3D glasses 110 and a control terminal 120.

The display 100 includes a signal transmission/reception unit 101 and a display unit 102 and the display 100 displays a 3D image including a left eye image for a left eye and a right eye image for a right eye. When the right eye image is displayed on the display 100, a left eye shutter 114 of the 3D glasses 110 is closed and when the left eye image is displayed on the display 100, the left eye shutter 114 of the 3D glasses 110 transmits or passes the left eye image. That is, when the left eye image is displayed on the display 100, the left eye shutter 114 of the 3D glasses 110 transmits the left eye image and a right eye shutter 113 of the 3D glasses 110 blocks the left eye image. A right eye shutter 113 operates inversely to the left eye shutter 114. That is, when the right eye image is displayed, the right eye shutter 113 of the 3D glasses 110 shields transmits the right eye image and the left eye shutter 114 blocks the right eye image.

The display 100 may divide the left eye image and the right eye image by frame and display the divided left eye and right eye images. A user wearing the 3D glasses 110 may three-dimensionally watch the image through opening and closing of the left eye shutter 114 and the right eye shutter 113.

In addition, the display 100 may further include a signal transmission/reception unit 101 which receives a control signal from the control terminal 120. The display 100 may include various devices such as a television, a monitor and a portable terminal including a cellular phone which receive a 3D image from an image source and display the received 3D image. Moreover, though exemplary embodiments described herein are with reference to a display 100 including a display unit 102, it is understood that other exemplary embodiments are not limited thereto. For example, another exemplary embodiment may implement an image processing apparatus that does not include a display unit, such as a set-top box.

The signal transmission/reception unit 101 generates a synchronization signal and transmits the synchronization signal to the 3D glasses 110 so that the left eye and right eye shutters 114 and 113 of the 3D glasses 110 open and close in synchronization with the image which is displayed on the display unit 102. The synchronization signal may transmit per a pair of the left and right eye images, that is, every two frames, or per one frame. The signal transmission/reception unit 101 may communicate with a signal reception unit 112 of the 3D glasses 110 using a wireless communication such as infrared communication, Bluetooth communication, radio frequency (RF) band wireless local area network (LAN) communication, RF communication, etc.

The display 100 may further include a signal reception unit (not shown) which receives an image signal from an image source, an image signal processing unit (not shown) which processes the received image signal, and the like.

The signal reception unit of the display transmits the received 3D image signal to the image signal processing unit.

The image signal processing unit may perform a signal processing such as at least one of video decoding, format analysis, video scaling, graphic user interface (GUI) addition, etc., for a 3D image received from the signal reception unit of the display 100.

The 3D image received from the signal reception unit of the display 100 may have any of various formats. For example, a format of the 3D image received from the signal reception unit of the display 100 may be a general frame sequential scheme, a top and bottom scheme, a side-by-side scheme, a vertical interleave scheme and a checker-board scheme.

The display unit 102 displays an image based on a processed image signal. The display unit 102 may include a liquid crystal (LC) panel including an LC layer, an organic light emitting panel including a light emitting layer formed of an organic material, a plasma display panel, or the like. The display unit 102 may include a panel driving unit which drives the panels.

The 3D glasses 110 include a glasses body 111 and the left eye shutter 114 and the right eye shutter 113 are located in the glasses body 111. The left eye shutter 114 and the right eye shutter 113 may be opened and closed in synchronization with the left eye image and the right eye image which are displayed on the display 100.

The signal reception unit 112 receives the synchronization signal from the display 100. Here, the signal reception unit 112 may include an infrared receiver which receives an infrared light according various infrared communication schemes.

The control terminal 120 generates the control signal related to controlling brightness of the image which penetrates the 3D glasses 110. The control signal is provided to the 3D glasses 110.

A user may manipulate the control terminal 120 so that a user interface (UI) screen (not shown) related to the brightness of the 3D glasses 110 is displayed on the display unit 102 of the display 100.

The user may select an item (not shown) which controls driving signals for the left eye shutter 114 and the right eye shutter 113 of the 3D glasses 110 on the UI screen by manipulating the control terminal 120 for controlling brightness.

Here, the item may be at least one of an item for controlling a voltage amplitude of the driving signals of the left eye shutter 114 and the right eye shutter 113, and a duty of a shutter-on driving signal.

Control information which is selected by the user through the above-described items for controlling brightness is transmitted to the signal reception unit 112 through the signal transmission/reception unit 101. The 3D glasses 110 control transmittances of the left eye shutter 114 and the right eye shutter 113 which are viewed by the user by controlling the driving signals of the left shutter 114 and the right eye shutter 113. Accordingly, the user can watch an image having the controlled brightness through the 3D glasses 110.

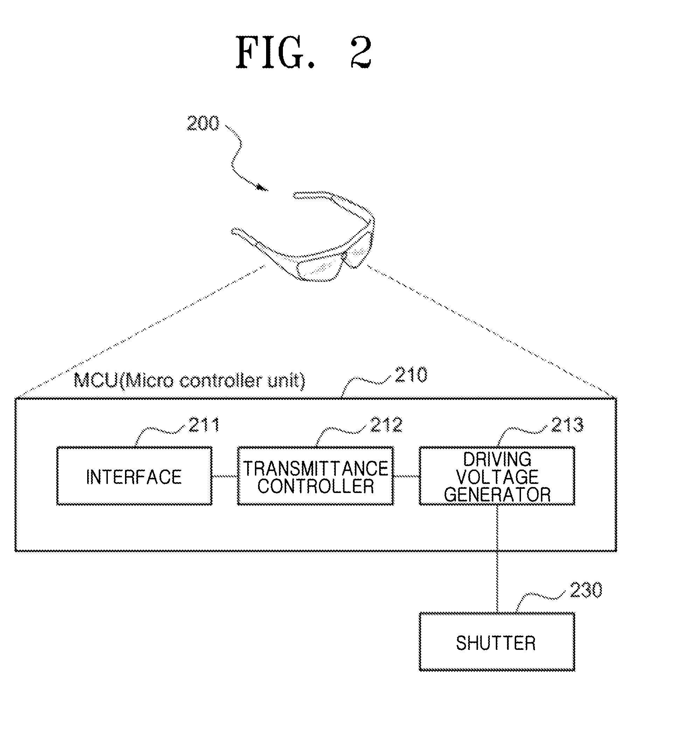

FIG. 2 is a block diagram of 3D glasses 200 according to an exemplary embodiment.

The 3D glasses 200 may further include a microcontroller unit (MCU) 210 and shutters in addition to the glasses body 111. The 3D glasses 200 may further include a glasses driving unit (not shown) which drives the left eye shutter 114 and the right eye shutter 113 thereof and a battery unit (not shown).

The glasses driving unit performs an auto gain control (AGC) for the input synchronization signal to drive the left eye shutter 114 and the right eye shutter 113. The left eye shutter 114 and the right eye shutter 113 may be embodied by a LC and are opened and closed by driving of the glasses driving unit.

As shown in FIG. 2, the 3D glasses 200 include the MCU 210 and a shutter 230.

According to the exemplary embodiment, the MCU 210 includes an interface 211, a transmittance controller 212 and a driving voltage generator 213.

The interface 211 receives the control signal related to controlling brightness of an image. At this time, the interface 211 may receive a control signal from a control unit (not shown) attached to the 3D glasses 200. Alternatively, the interface 211 may receive a control signal from a control terminal 120 or the display 100 through wireless communication. Here, the wireless communication may include infrared communication, Bluetooth communication, RF band wireless LAN, RF communication, or the like.

The transmittance controller 212 controls transmittance of the 3D glasses 110 based on the control signal received through the interface 211. Specifically, the transmittance controller 212 may control a driving voltage generated by the driving voltage generator 213 based on the control signal and the transmittance of the 3D glasses 200 through the controlling of the driving voltage.

That is, the transmittance of the 3D glasses 200 may be determined according to the driving voltage generated by the driving voltage generator 213 and the transmittance controller 212 may control the driving voltage generated by the driving voltage generator 213 based on the above control signal for brightness.

The driving voltage generator 213 generates the driving voltage which drives the shutter 230. The shutter 230 includes a left eye shutter and a right eye shutter and generates a left eye driving signal for driving the left eye shutter and a right eye driving signal for driving the right eye shutter, thereby driving the left eye shutter and the right eye shutter, respectively.

On the other hand, there is a duty between a left eye driving signal and a right eye driving signal. That is, the left eye driving signal and the right eye driving signal may be turned on or off at different time points. The left eye shutter and the right eye shutter are opened and closed according to the driving signal received from the driving voltage generator 213, respectively.

The shutter 230 may include the left eye shutter and the right eye shutter as above described in FIG. 1 and the left eye shutter and the right eye shutter are opened and closed according to the synchronization signal received from the display 100. In addition, although not shown in FIG. 2, the shutter 230 may further include a glasses driving unit.

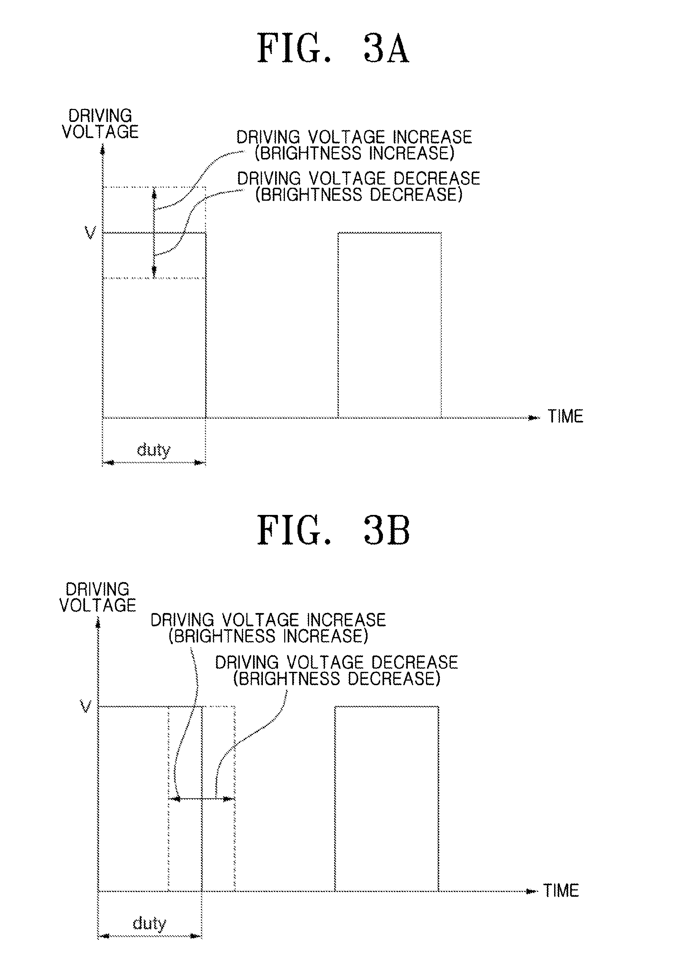

FIG. 3A is a graph illustrating increase and decrease of an amplitude of a driving voltage of 3D glasses according to an exemplary embodiment.

Hereinafter, a method of controlling brightness of an image which penetrates the shutter 230 by controlling a driving voltage generated by the driving voltage generator 213 will be described.

The shutter 230 includes an LC and the larger an intensity of a voltage applied to the LC, the greater the transmittance of the LC becomes. Accordingly, the more increased the intensity of the driving voltage is, the higher the transmittance of the shutter may be, and the more decreased the intensity of the driving voltage is, the lower the transmittance of the shutter may be.

Exemplary embodiments may control the brightness of the image transmitted through the 3D glasses using the above phenomenon. That is, when a user wants to increase the brightness of the image transmitted through the 3D glasses (i.e., the user wants to increase transmittance of the 3D glasses), the user may increase or decrease the driving voltage through a control unit attached to the 3D glasses or a control unit detached from the 3D glasses (i.e., a control unit attached to the display unit or the control terminal). According to exemplary embodiments, although the user does not control the brightness of the image output from the display, the user can control the brightness of the image by controlling the transmittance of the 3D glasses through the controlling of the driving voltage.

FIG. 3B is a graph illustrating increase and decrease of a duty of a driving voltage of the 3D glasses according to an exemplary embodiment.

Duty refers to a time that the left eye shutter or the right eye shutter has been opened by the driving voltage. That is, the time when turning on/off of the LC according to a voltage is referred to as the duty. The longer the duty is, the longer the time of turning off of the shutter. Accordingly, the increase of turning off denotes that the image passes through the LC for a longer time so that the brightness of the image can be controlled by appropriately controlling the duty.

The larger the duty of the driving voltage, the greater the transmittance of the shutter, and the smaller the duty of the driving voltage, the less the transmittance of the shutter. Accordingly, the user can control the transmittance of the shutter through the control unit attached to the 3D glasses or through the control terminal detached from the 3D glasses and further control the brightness of the image.

Furthermore, according to another exemplary embodiment, a control may simultaneously control the increase or decrease in the amplitude of the driving voltage and the increase or decrease in the duty of the driving voltage.

Although not indicated in FIG. 3A or 3B, cross-talk between an image focused on a left eye and an image focused on a right eye may be reduced based on variation in the duty or amplitude of the driving voltage.

That is, a duty in which the left eye is opened and a duty in which the right eye is opened are alternatively operated according to the driving voltage. The driving voltage applied to the shutter is not sharply increased with respect to time, but is increased with a slight gradient. As such, the phenomenon that the left eye image and the right eye image overlap each other may occur, when operation states of the left eye shutter and the right eye shutter are switched. The phenomenon that the left eye image and the right eye image overlap is referred to as cross-talk. However, the overlapping phenomenon can be reduced by reducing the duties of the left eye shutter and the right eye shutter. The phenomenon in which the left eye image and the right eye image overlap can be reduced if the duty of the driving voltage becomes smaller. Thus, the overlapping space between the left eye image and he right eye image becomes smaller to reduce the cross-talk.

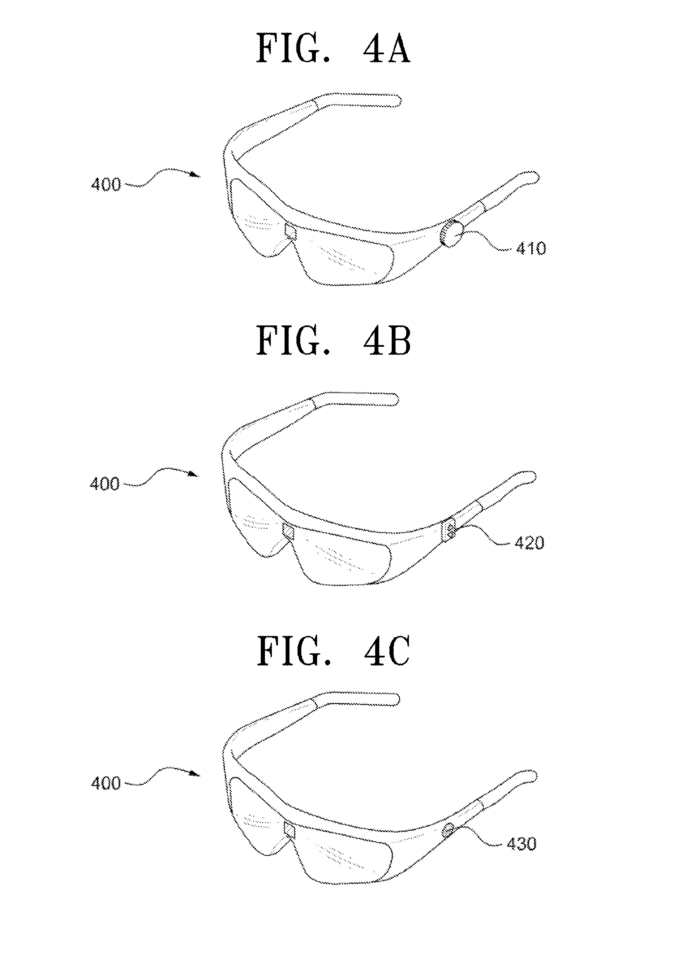

FIGS. 4A to 4C are views illustrating 3D glasses including control units attached thereto according to exemplary embodiments.

Referring to FIG. 4A, a control wheel 410 may be attached to 3D glasses 400 as an example of a control unit. The user may control the driving voltage through the control wheel 410.

For example, the user may turn the control wheel 410 in a clockwise direction to increase the driving voltage. Alternatively, the user may turn the control wheel 410 in a counter clockwise direction to reduce the driving voltage.

The principle of controlling the driving voltage and transmittance of the 3D glasses and the brightness of the image is described above and will be omitted herein.

Referring to FIG. 4B, an UP/DOWN button 420 may be attached to the 3D glasses 400 as another example of a control unit. The user may control the driving voltage through the UP/DOWN button 420.

For example, the user may press an UP button to increase the driving voltage and alternatively the user may press a DOWN button to reduce the driving voltage. The user can control the brightness of the image without directly manipulating the display through the controlling of the driving voltage.

FIG. 4C illustrates a type in which an optical sensor 430 is attached to the 3D glasses 400. The 3D glasses 400 may control the brightness of the image, that is, the driving voltage, using the optical sensor 430 in addition to or other than the various control units as described above.

The optical sensor 430 may sense brightness of the image radiated from the display 100 and control the transmittance of the 3D glasses 400 based on the sensed brightness of the image. For example, if the brightness of the image radiated from the display 100 is larger than or equal to a preset reference value, the driving voltage may be increased. Alternatively, if the brightness of the image radiated from the display 100 is smaller than the preset reference value, the driving voltage may be reduced.

Accordingly, the present exemplary embodiment may control the transmittance of the 3D glasses adaptively to an environment using the optical sensor 430. For example, if the environment is very bright, that is, the brightness of the image radiated from the display 100 by sensed by the optical sensor 430 is lower than brightness of the environment, the user may increase the brightness of the image which penetrates the 3D glasses 400 by increasing the driving voltage.

On the other hand, if the brightness of the image radiated from the display 100 is higher than the brightness of the environment, the user may reduce the brightness of the image which penetrates the 3D glasses 400 by reducing the driving voltage.

By using the optical sensor 430, the 3D glasses 400 may automatically sense the brightness of the image without the user's manipulation.

Furthermore, one or more exemplary embodiments may provide a UI screen which allows the user to control the brightness of the 3D glasses. At this time, the UI screen may be displayed on the display or on the 3D glasses.

In the case where the UI screen is displayed on the display, the user may control the transmittance of the 3D glasses using a control terminal or a control unit on the display or the 3D glasses, while watching the UI screed displayed on the display.

The UI screen may be displayed on the 3D glasses. In this case, the user may control the transmittance of the 3D glasses using the control terminal or a control unit on the display or the 3D glasses, while watching the UI screen.

The user may conveniently control the transmittance (i.e., the brightness of the image) of the 3D glasses through the above method.

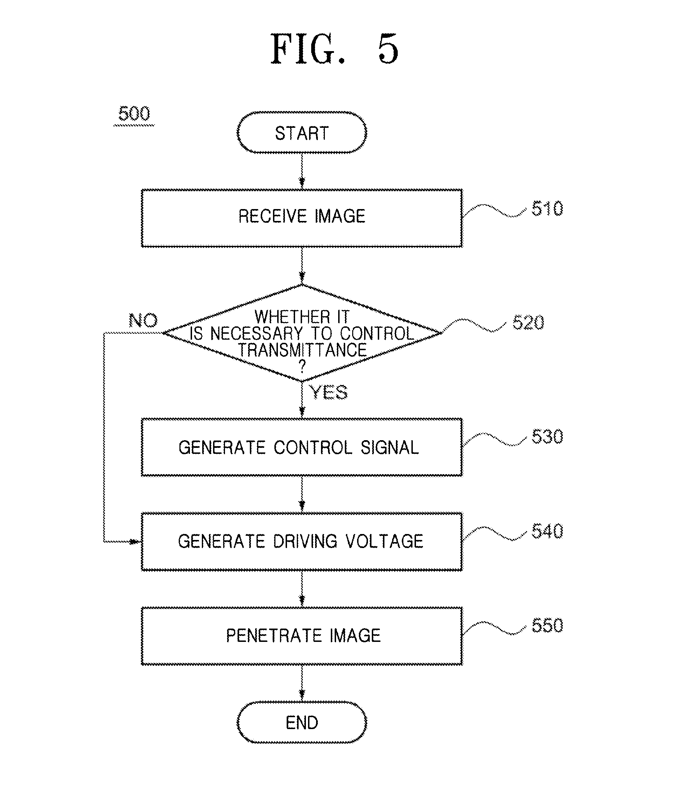

FIG. 5 is a flowchart illustrating a method of controlling 3D glasses according to an exemplary embodiment.

Referring to FIG. 5, the 3D glasses receive an image radiated from the display in a light type (operation S510).

At this time, it is determined whether to control transmittance of the 3D glasses (operation S520). If it is determined not to control the transmittance, the method proceeds to operation S540. On the other hand, if it is determined to control the transmittance, the 3D glasses generate a control signal (operation S530). The control signal may be a control signal which is generated through various control terminals such as a control wheel, an UP/DOWN button and the like as described above.

In addition, the 3D glasses generate a driving voltage in consideration of the generated control signal (operation S540). At this time, the 3D glasses may control at least one of the amplitude of the driving voltage and the duty of the driving voltage according to the control signal.

The driving voltage is provided to a shutter and brightness of the image transmitted through the shutter may be controlled by the driving voltage.

A method of processing an image as shown in FIG. 5 may be adapted to the descriptions with reference to FIGS. 1 to 4.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units of the image processing apparatus, the display, the 3D glasses, and the control terminal can include a processor or microprocessor executing a computer program stored in a computer-readable medium.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. Three-dimensional (3D) glasses, comprising:
glasses receiving an image from an image device;
an interface receiving a control signal related to controlling brightness of the image; and
a shutter which is driven by the control signal.

2. The glasses of claim 1, further comprising a transmittance controller which controls transmittance of the shutter according to the control signal.

3. The glasses of claim 2, further comprising an optical sensor which senses at least one of the brightness of the image and brightness of an environment,
wherein the transmittance controller controls the transmittance of the shutter by considering at least one of the sensed brightness of the image and the sensed brightness of the environment.

4. The glasses of claim 2, further comprising a driving voltage generator which controls a driving voltage of the shutter according to the control signal.

5. The glasses of claim 4, wherein the driving voltage generator controls the driving voltage of the shutter by controlling an amplitude of the driving voltage.

6. The glasses of claim 4, wherein the driving voltage generator controls the driving voltage of the shutter by controlling a duty ratio of the driving voltage.

7. The glasses of claim 1, wherein the interface receives the control signal through at least one of a control wheel attached to the 3D glasses, an UP/DOWN button, and a remote controller.

8. A display apparatus, comprising:
a display unit which generates an image which is to be transmitted to three-dimensional (3D) glasses;
a controller which provides a user interface (UI) screen used for generating a control signal which controls brightness of the image viewed by a user by controlling transmittance of the 3D glasses; and
a signal transmission unit which transmits the control signal to the 3D glasses according to an input of the user for the UI screen.

9. The apparatus of claim 8, wherein the control signal is a control signal which controls at least one of an amplitude and a duty ratio of a shutter driving voltage of the 3D glasses.

10. A control terminal comprising:
a controller which generates a control signal related to controlling brightness of an image which penetrates three-dimensional (3D) glasses and provides the control signal to the 3D glasses to allow the 3D glasses to control brightness of the image by controlling transmittance of the 3D glasses.

11. The terminal of claim 10, wherein the control signal is provided to the 3D glasses through a display which generates the image.

12. The terminal of claim 10, wherein the control signal is generated through at least one of a control wheel attached to the 3D glasses, an UP/DOWN button, and an optical sensor.

13. A method of controlling three-dimensional (3D) glasses, the method comprising:
receiving an image from an image device;
receiving a control signal related to controlling brightness of the image; and
controlling a shutter of the 3D glasses according to the control signal.

14. A method of processing an image of a display device, the method comprising:
generating an image which is to be transmitted to three-dimensional (3D) glasses; and
transmitting a control signal to the 3D glasses to allow the 3D glasses to control brightness of the image by controlling transmittance of the 3D glasses.

15. A method of controlling a control terminal, the method comprising:
generating a control signal related to controlling brightness of an image which penetrates three-dimensional (3D) glasses; and
providing the control signal to the 3D glasses to allow the 3D glasses to control the brightness of the image by controlling transmittance of the 3D glasses.
